# EUROPEAN PATENT APPLICATION

(11) **EP 3 258 362 A1**
(43) Date of publication of application: **20.12.2017**
(21) Application number: 15897404.8
(22) Date of filing: 03.07.2015
(51) Int. Cl.: G06F 3/0484

(54) **OPERATION METHOD APPLIED TO TERMINAL DEVICE, AND TERMINAL DEVICE**

(71) Applicant: Huawei Technologies Co., Ltd., Longgang District Shenzhen, Guangdong 518129 (CN)
(72) Inventor: XU, Jie, Shenzhen Guangdong 518129 (CN); WANG, Jin, Shenzhen Guangdong 518129 (CN); WU, Gang, Shenzhen Guangdong 518129 (CN)
(74) Representative: Gill Jennings & Every LLP
(86) International application number: PCT/CN2015/083322
(87) International publication number: WO 2017/004748

(57) **Abstract**

Embodiments of the present invention disclose an operation method applied to a terminal device. A surface of the terminal device is provided with three touch regions that correspond respectively to three system navigation functions, and the three system navigation functions include back, home, and recent app. The method includes: when the terminal device detects a pressure that is exerted on one of the three touch regions and whose magnitude exceeds a preset value, implementing a system navigation function corresponding to the touch region on which the pressure is exerted. In addition to common tap and touch and hold operations, the operation method can provide a force touch operation manner for a user to quickly and conveniently operate a system navigation function.

## Description

### TECHNICAL FIELD

The present invention relates to the field of mobile communications technologies, and in particular, to an operation method applied to a terminal device and a terminal device.

### BACKGROUND

Currently, a touchscreen of a terminal device allows users to perform two types of operations: tap, and touch and hold. For a user's tap operation, the terminal device utilizes electrical conductivity of a finger to determine a position that the finger taps and implements a corresponding function. For a user's touch and hold operation, the terminal device detects a time at which the user touches a point on a screen, and after a specified period of time expires, identifies the operation as a touch and hold operation and implements a corresponding function. As terminal devices' screens become larger, it is inconvenient to tap edges of a screen when a user holds a terminal device with one hand. Therefore, an operation method applied to a terminal device is required, so that the user can quickly and conveniently operate the terminal to implement a specific function.

### SUMMARY

To resolve the foregoing technical problem, embodiments of the present invention provide an operation method applied to a terminal device and a terminal device, so that a user can quickly and conveniently operate the terminal to implement a specific function.

According to a first aspect, an embodiment of the present invention provides an operation method applied to a terminal device, where a surface of the terminal device is provided with three touch regions, and the three touch regions correspond respectively to three system navigation functions including back, home, and recent app. The method includes: when the terminal device detects a pressure that is exerted on one of the three touch regions and whose magnitude exceeds a preset value, implementing, by the terminal device, a system navigation function corresponding to the touch region on which the pressure is exerted.

According to a second aspect, an embodiment of the present invention provides a terminal device, where a surface of the terminal device is provided with three touch regions, and the three touch regions correspond respectively to three system navigation functions including back, home, and recent app. The terminal device includes: a pressure sensor, configured to: when detecting a pressure exerted on one of the three touch regions, where a magnitude of the pressure exceeds a preset value, instruct a processor to implement a system navigation function corresponding to the touch region on which the pressure is exerted; and the processor, configured to implement the system navigation function corresponding to the touch region on which the pressure is exerted.

According to a third aspect, an embodiment of the present invention provides another operation method applied to a terminal device, including: when the terminal device detects a pressure exerted on an icon of an app on a screen of the terminal device, where the terminal device is in a lock screen state, and a magnitude of the pressure exceeds a preset value, unlocking, by the terminal device, the screen and running the app.

According to a fourth aspect, an embodiment of the present invention provides another terminal device, including: a pressure sensor, configured to: when detecting, with the terminal device in a lock screen state, a pressure exerted on an icon of an app on a screen of the terminal device, where a magnitude of the pressure exceeds a preset value, instruct a processor to unlock the screen and run the app; and the processor, configured to unlock the screen and run the app.

A beneficial effect brought by the technical solutions provided in the embodiments of the present invention is allowing a user to quickly and conveniently operate a system navigation function by performing a force touch in a touch region that is arranged on a surface of a terminal device.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is an operation method applied to a terminal device according to an embodiment of the present invention;
FIG. 2 is a touch region arrangement method according to an embodiment of the present invention;
FIG. 3 is another touch region arrangement method according to an embodiment of the present invention;
FIG. 4 is a schematic structural diagram of a terminal device according to an embodiment of the present invention;
FIG. 5 is another operation method applied to a terminal device according to an embodiment of the present invention; and
FIG. 6 is a schematic structural diagram of another terminal device according to an embodiment of the present invention.

### DESCRIPTION OF EMBODIMENTS

To make the objectives, technical solutions, and advantages of the present invention clearer, the following further describes the embodiments of the present invention in detail with reference to the accompanying drawings.

A device described in the embodiments of the present invention may also be referred to as a terminal (Terminal), a system, a subscriber unit, a subscriber station, a mobile station, a mobile station, a remote station, a remote terminal, a mobile device, a user terminal, a mobile terminal, a wireless communications device, a user proxy, a user apparatus, or user equipment (full spelling in English: User Equipment, UE for short). For example, the device may be a cell phone, a cordless phone, a Session Initiation Protocol (Session Initiation Protocol, SIP for short) phone, a wireless local loop (Wireless Local Loop, WLL for short) station, a personal digital assistant (Personal Digital Assistant, PDA for short), a handheld device that has a wireless communications function, a computer device, a vehicle-mounted communications module, a smart meter, a smart home device, or another processing device that is connected to a wireless modem.

In the embodiments of the present invention, a face in which a screen of a terminal device is located is referred to as a front face. Unless otherwise specified, a "bezel" described in the embodiments of the present invention refers to a frame of the terminal device, and an "edge" refers to a part that abuts upon or is close to the bezel.

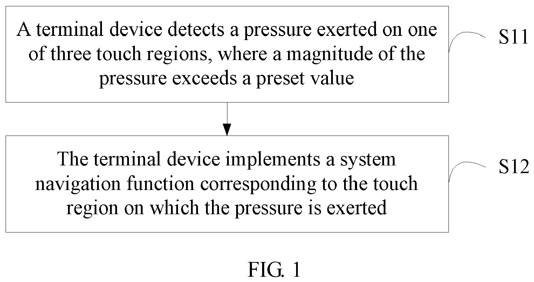

Embodiment 1 of the present invention provides an operation method applied to a terminal device. A surface of the terminal device is provided with three touch regions, including first, second, and third touch regions. The three touch regions do not overlap each other, and correspond respectively to three system navigation functions. The three system navigation functions include back (English: Back), home (English: Home), and recent app (English: Recent App). "Back" means returning to a previous screen display page. "Home" means entering a home screen or a home page. "Recent app" means displaying a list of recently-used apps. Specifically, which touch region corresponds to which system navigation function may be set by a user. As shown in FIG. 1, the method includes the following steps.
S11: The terminal device detects a pressure exerted on one of the three touch regions, where a magnitude of the pressure exceeds a preset value.

A user may perform a force touch on any one of the three touch regions by using a finger or a stylus, and a pressure of the force touch needs to exceed the preset value to distinguish from common tap and touch and hold operations. Generally, a user's tap and touch and hold operations both have a specific pressure exerted on a screen. However, the pressure of the force touch in this embodiment of the present invention is greater than a pressure in a tap or touch and hold operation. When a pressure that exceeds the preset value is exerted on any one of the three touch regions, the terminal device detects the pressure and performs a next step. The preset value is not specifically limited in this embodiment of the present invention. Any pressure magnitude that can distinguish from common tap and touch and hold operations may be used as the preset value.
S12: The terminal device implements a system navigation function corresponding to the touch region on which the pressure is exerted.

According to the operation method applied to a terminal device provided in this embodiment of the present invention, in addition to common tap and touch and hold operations, a force touch operation manner can be provided for a user to quickly and conveniently operate a system navigation function.

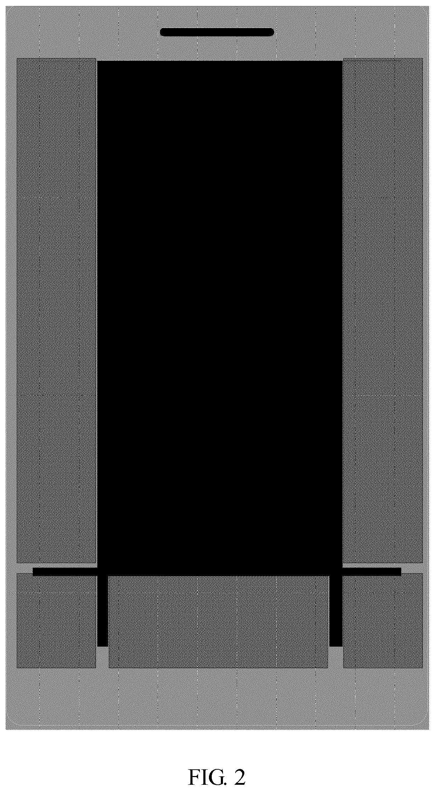

As shown in FIG. 2, all the three touch regions may be arranged on a front face of the terminal device. A diagonal box indicates the first touch region, a dotted box indicates the second touch region, and a gridded box indicates the third touch region. The first touch region is divided into two parts that are symmetrically arranged at two bezel edges of the front face of the terminal device. In FIG. 2, the first touch region is arranged at edges of left and right bezels of the front face of the terminal device or may be arranged at edges of upper and lower bezels, to facilitate the ease of force touches when the user holds the terminal device horizontally. It should be noted that the two parts into which the first touch region is divided are exactly the same, both corresponding to a same system navigation function. In addition, in this embodiment of the present invention, for any touch region that is divided into multiple parts, these parts all correspond to a same system navigation function. The second touch region is also divided into two parts that are symmetrically arranged in two corners of the front face of the terminal device. In FIG. 2, the second touch region is arranged in two corners neighboring the lower bezel. The third touch region is divided into two parts or arranged as an entirety in the middle of a bezel edge of the front face of the terminal device. In FIG. 2, the third touch region is arranged as an entirety in the middle of a lower bezel edge of the front face of the terminal device. As shown in FIG. 2, the three touch regions each cover a part of the screen. It should be noted that, in this embodiment of the present invention, whether a touch region covers a part of the screen depends on whether a pressure sensor is provided only under the screen. When a pressure sensor is provided also under a surface other than the screen of the terminal device, none of the three touch regions may overlap the screen. For example, all the three touch regions are arranged at bezels of the front face of the terminal device; or certainly, some of the touch regions may cover a part of the screen, and some of the touch regions do not overlap the screen. The symmetrical arrangement of touch regions in FIG. 2 allows the user to quickly and conveniently operate a system navigation function regardless of whether the user holds the terminal device with the left hand or the right hand.

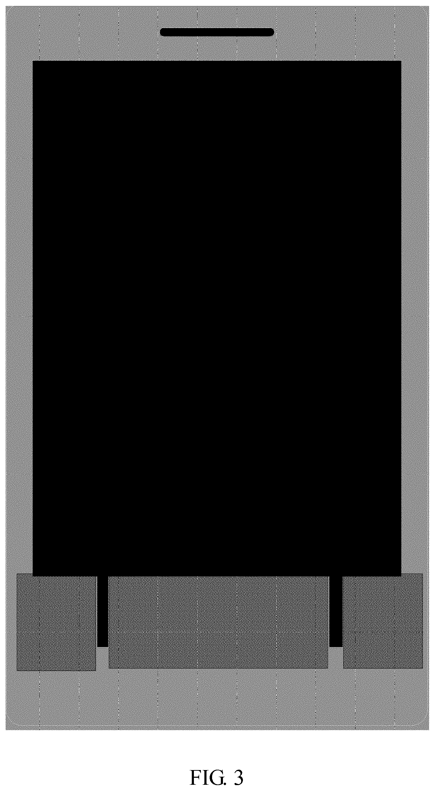

As shown in FIG. 3, all the three touch regions may be arranged horizontally at the lower bezel edge of the front face of the terminal device. A position of the second touch region in FIG. 3 is the same as that in FIG. 2, and the first touch region and the third touch region are arranged on two sides of the second touch region respectively. For a terminal device in which a system navigation function is designed as a virtual button and displayed at the bottom of the screen, by using the touch region arrangement manner in FIG. 1, the virtual button for the system navigation function may be replaced and hidden to enlarge a display area of the screen.

At least one of the three touch regions may be further divided into two parts that are symmetrically arranged on two lateral faces of the terminal device to facilitate the ease of force touches on a touch region arranged on a lateral face when the user holds the terminal device with one hand.

Further, at least one of the three touch regions may be arranged at the back of the terminal device. When all the three touch regions are arranged at the back of the terminal device, reference may be made to the arrangement manner in FIG. 2 or another arrangement manner may be used.

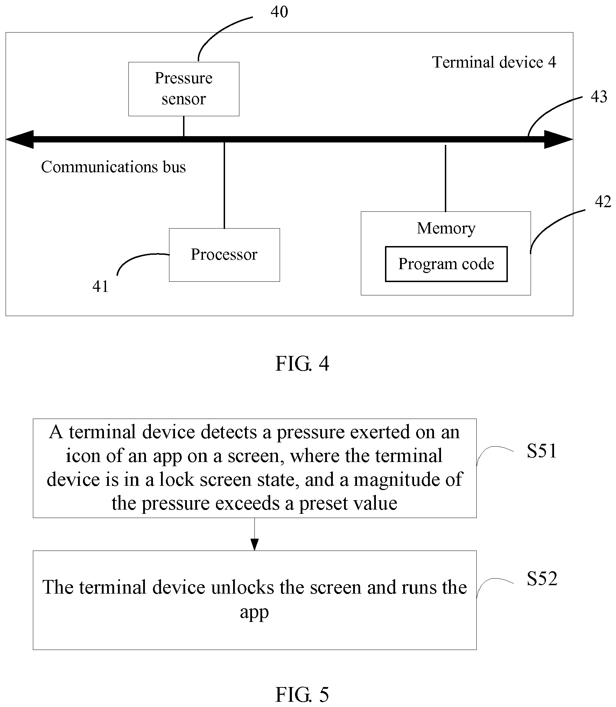

Embodiment 2 of the present invention provides a terminal device 4. A surface of the terminal device 4 is provided with three touch regions that correspond respectively to three system navigation functions: back, home, and recent app. As shown in FIG. 4, the terminal device includes:
a pressure sensor 40, configured to: when detecting a pressure exerted on one of the three touch regions, where a magnitude of the pressure exceeds a preset value, instruct a processor 41 to implement a system navigation function corresponding to the touch region on which the pressure is exerted; and
the processor 41, configured to implement the system navigation function corresponding to the touch region on which the pressure is exerted.

Optionally, the terminal device 4 further includes:
a memory 42, configured to store program code; and
a communications bus 43, configured to connect the pressure sensor 40, the processor 41, and the memory 42.

Further, the pressure sensor 40 may be a detection unit/module, and the processor 41 may be a processing unit/module.

An arrangement manner for the touch regions may be the arrangement manner in Embodiment 1, and details are not further described in this embodiment.

Embodiment 3 of the present invention provides another operation method applied to a terminal device. As shown in FIG. 5, the method includes the following steps.

S51: The terminal device detects a pressure exerted on an icon of an app on a screen, where the terminal device is in a lock screen state, and a magnitude of the pressure exceeds a preset value.

When the terminal device in this embodiment of the present invention is in the lock screen state, a lock screen interface displays apps installed on the terminal device, and a user may swipe the lock screen interface to browse apps on multiple pages. However, in this case, the user cannot open an app by means of a tap or touch and hold operation.

The user may perform a force touch on an icon of an app on the screen by using a finger or a stylus, and a pressure of the force touch needs to exceed the preset value to distinguish from common tap and touch and hold operations. Generally, a user's tap and touch and hold operations both have a specific pressure exerted on a screen. However, the pressure of the force touch in this embodiment of the present invention is greater than a pressure in a tap or touch and hold operation. When a pressure whose magnitude exceeds the preset value is exerted on an icon of an app on the screen, the terminal device detects the pressure and performs a next step.

It should be noted that, when the user performs a force touch on an icon of an app on the screen, a force-bearing area on the screen may cover the entire icon or may cover only a part of the icon. In this embodiment of the present invention, a text name under the icon is also a part of the icon.
S52: The terminal device unlocks the screen and runs the app.

When the terminal device in the lock screen state detects the pressure that is exerted on the icon of the app and that exceeds the preset value, the terminal device unlocks the screen and runs the app.

In this embodiment of the present invention, when detecting a pressure that is exerted on an icon of an app and whose magnitude exceeds a preset value, a terminal device directly unlocks a screen and runs the app, so that a user can quickly open the app on the terminal device that is in a lock screen state. User experience is improved.

Optionally, if the user performs a force touch on an icon of an app on the screen by using a finger, before unlocking the screen, the terminal device first recognizes the user's fingerprint, compares the fingerprint with a fingerprint pre-enrolled into the terminal device, and when a comparison result is that they match, unlocks the screen and runs the app. This not only allows the user to quickly open the app on the terminal device in the lock screen state, but also ensures security of the user's terminal device.

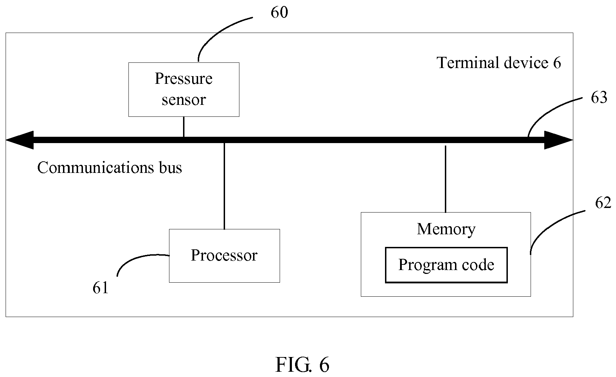

Embodiment 4 of the present invention provides a terminal device 6. As shown in FIG. 6, the terminal device includes:
a pressure sensor 60, configured to: when detecting, with the terminal device in a lock screen state, a pressure exerted on an icon of an app on a screen, where a magnitude of the pressure exceeds a preset value, instruct a processor 61 to unlock the screen and run the app; and
the processor 61, configured to unlock the screen and run the app.

Optionally, the terminal device 6 further includes:
a memory 62, configured to store program code; and
a communications bus 63, configured to connect the pressure sensor 60, the processor 61, and the memory 62.

Further, the pressure sensor 60 may be a detection unit/module, and the processor 61 may be a processing unit/module.

The terminal device may further include a fingerprint sensor that is configured to: when a user performs a force touch on an icon of an app by using a finger, recognize a fingerprint of the user and compare the fingerprint with a fingerprint pre-enrolled into the terminal device before the screen is unlocked.

It should be understood that, in the foregoing embodiments of the present invention, the processor may be a central processing unit (Central Processing Unit, CPU for short), or may be another universal processor, a digital signal processor (DSP), an application specific integrated circuit (ASIC), a field programmable gate array (FPGA) or another programmable logic device, a discrete gate or a transistor logic device, a discrete hardware component, or the like. The universal processor may be a microprocessor, or the processor may be any conventional processor or the like.

The memory may include a read-only memory and a random access memory, store program code, and provide instructions and data to the processor.

The communications bus may further include a power bus, a control bus, a status signal bus, and the like, in addition to a data bus. However, for clear description, various types of buses in the figure are marked as the communications bus.

In an implementation process, steps in the foregoing methods may be implemented by using a hardware integrated logic circuit in the processor, or by using instructions in a form of software. The steps of the method disclosed with reference to the embodiments of the present invention may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

The foregoing descriptions are merely specific embodiments of the present invention, but are not intended to limit the protection scope of the present invention. Any modification or replacement readily figured out by a person skilled in the art within the technical scope disclosed in the present invention shall fall within the protection scope of the present invention. Therefore, the protection scope of the present invention shall be subject to the protection scope of the claims.

## Claims

1. An operation method applied to a terminal device, wherein a surface of the terminal device is provided with three touch regions, the three touch regions correspond respectively to three system navigation functions, and the three system navigation functions comprise back, home, and recent app, and the method comprises:
detecting, by the terminal device, a pressure exerted on one of the three touch regions, wherein a magnitude of the pressure exceeds a preset value; and
implementing, by the terminal device, a system navigation function corresponding to the touch region on which the pressure is exerted.

2. The method according to claim 1, wherein the three touch regions comprise first, second, and third touch regions, wherein the first touch region is divided into two parts that are symmetrically arranged at two bezel edges of a front face of the terminal device; the second touch region is divided into two parts that are symmetrically arranged in two corners of the front face of the terminal device; and the third touch region is divided into two parts or arranged as an entirety in the middle of one bezel edge of the front face of the terminal device.

3. The method according to claim 1, wherein at least one of the three touch regions is divided into two parts that are symmetrically arranged on two lateral faces of the terminal device.

4. The method according to claim 1, wherein the three touch regions are horizontally arranged at a lower bezel edge of a front face of the terminal device.

5. The method according to any one of claims 1 to 4, wherein at least one of the three touch regions comprises a part of a screen of the terminal device, or none of the three touch regions overlaps a screen of the terminal device.

6. An operation method applied to a terminal device, comprising:
detecting, by the terminal device, a pressure exerted on an icon of an app on a screen of the terminal device, wherein the terminal device is in a lock screen state, and a magnitude of the pressure exceeds a preset value; and
unlocking, by the terminal device, the screen and running the app.

7. A terminal device, wherein a surface of the terminal device is provided with three touch regions, the three touch regions correspond respectively to three system navigation functions, and the three system navigation functions comprise back, home, and recent app, and the terminal device comprises:
a pressure sensor, configured to: when detecting a pressure exerted on one of the three touch regions, wherein a magnitude of the pressure exceeds a preset value, instruct a processor to implement a system navigation function corresponding to the touch region on which the pressure is exerted; and
the processor, configured to implement the system navigation function corresponding to the touch region on which the pressure is exerted.

8. The terminal device according to claim 7, wherein the three touch regions comprise first, second, and third touch regions, wherein the first touch region is divided into two parts that are symmetrically arranged at two bezel edges of a front face of the terminal device; the second touch region is divided into two parts that are symmetrically arranged in two corners of the front face of the terminal device; and the third touch region is divided into two parts or arranged as an entirety in the middle of one bezel edge of the front face of the terminal device.

9. The terminal device according to claim 7, wherein at least one of the three touch regions is divided into two parts that are symmetrically arranged on two lateral faces of the terminal device.

10. The terminal device according to claim 7, wherein the three touch regions are horizontally arranged at a lower bezel edge of a front face of the terminal device.

11. The terminal device according to any one of claims 7 to 10, wherein at least one of the three touch regions comprises a part of a screen of the terminal device, or none of the three touch regions overlaps a screen of the terminal device.

12. A terminal device, comprising:
a pressure sensor, configured to: when detecting, with the terminal device in a lock screen state, a pressure exerted on an icon of an app on a screen of the terminal device, wherein a magnitude of the pressure exceeds a preset value, instruct a processor to unlock the screen and run the app; and
the processor, configured to unlock the screen and run the app.
